# EUROPÄISCHE PATENTSCHRIFT

(11) **EP 3 997 298 B1**
(45) Veröffentlichungstag und Bekanntmachung des Hinweises auf die Patenterteilung: **12.03.2025**
(21) Anmeldenummer: 20739351.3
(22) Anmeldetag: 09.07.2020
(51) Int. Cl.: E06B 3/673, G01F 23/00

(54) **VERFAHREN UND VORRICHTUNG ZUM FÜLLEN VON HOHLPROFILLEISTEN**
METHOD AND DEVICE FOR FILLING HOLLOW PROFILE STRIPS
PROCÉDÉ ET DISPOSITIF DE REMPLISSAGE DE BAGUETTES PROFILÉES CREUSES

(30) Priorität: 11.07.2019 AT 2552019
(43) Veröffentlichungstag der Anmeldung: 18.05.2022
(73) Patentinhaber: LISEC Austria GmbH, 3353 Seitenstetten (AT)
(72) Erfinder: WIPPEL, Rainer, 3353 Seitenstetten (AT)
(74) Vertreter: Beer & Partner Patentanwälte KG
(86) Internationale Anmeldenummer: PCT/EP2020/069353
(87) Internationale Veröffentlichungsnummer: WO 2021/005149

(56) Entgegenhaltungen:
- EP-A1- 3 477 037
- DE-A1- 3 710 694

## Beschreibung

Die Erfindung betrifft ein Verfahren zum Füllen von Hohlprofilleisten, insbesondere Hohlprofilleisten, die Schenkel von Abstandhalterrahmen oder geschlossene Abstandhalterrahmen sind, wobei aus einem Speicherbehälter rieselfähiges Füllmaterial, insbesondere ein hygroskopisches Material, wie Molekularsieb, in die Hohlprofilleiste eingebracht wird.

Die Erfindung betrifft weiters eine Vorrichtung, mit der das erfindungsgemäße Verfahren durchgeführt werden kann.

Verfahren und Vorrichtungen zum Füllen von Hohlprofilleisten, insbesondere von Hohlprofilleisten, die als Abstandhalter in Isolierglas dienen, sind in verschiedenen Ausführungsformen bekannt.

Aus AT 383 581 B ist eine Vorrichtung zum Füllen von Abstandhalterrahmen für Isolierglas mit hygroskopischem Material bekannt, wobei die Abstandhalterrahmen einstückig durch Biegen hergestellte Ecken besitzen. Die Vorrichtung umfasst Halterungen für den zu füllenden Abstandhalterrahmen und mindestens ein Mehrfachbearbeitungswerkzeug, das eine Vorrichtung zum Herstellen einer Öffnung in der Außenwand des Abstandhalterrahmens, eine Düse zum Einfüllen des hygroskopischen Materials in den Abstandhalterrahmen und eine Düse zum Verschließen der Einfüllöffnung aufweist.

Eine weitere Vorrichtung zum Füllen von Abstandhalterrahmen von Isolierglas ist aus AT 383 582 B bekannt. Beschrieben wird eine Vorrichtung zum Füllen von Abstandhalterrahmen für Isolierglas mit hygroskopischem Granulat, bei der die einen Speicherbehälter mit der Austrittsöffnung für das Granulat verbindende Leitung einen Abschnitt mit größerem Querschnitt und einen Abschnitt mit kleinerem Querschnitt besitzt, der nach oben umgelenkt und dessen Achse gegenüber der Achse des Abschnittes mit größerem Querschnitt nach oben versetzt ist. Diese Vorrichtung wird beispielsweise in einer Maschine zum Füllen von Abstandhalterrahmen für Isolierglas verwendet, die zwei Bearbeitungsanordnungen aufweist, mit welchen in Schenkeln des Abstandhalterrahmens Löcher erzeugt, Granulat eingefüllt und die Löcher wieder verschlossen werden können. Die Bearbeitungsanordnungen besitzen eine Platte, an der der jeweilige Schenkel des Abstandhalterrahmens anliegt und in der ein Loch für den Durchtritt eines Bohrers sowie die Mündungen der Leitung für das Granulat und eines Kanals für Verschlussmasse angeordnet sind. Um die Schenkel des Abstandhalterrahmens, die von Klemmvorrichtungen erfasst sind, nacheinander in fluchtende Lage mit dem Loch für den Bohrer und die Mündungen für die Kanäle zu bringen, sind die Klemmeinrichtungen und die Platte relativ zueinander verschiebbar.

Aus AT 388 548 B, AT 390 606 B, EP 0 349 519 A1 und EP 0 376 926 A2 sind Verfahren und Vorrichtungen zum Füllen von Abstandhalterrahmen mit Füllmaterial (hygroskopisches Material, wie Molekularsieb) bekannt.

Aus DE 44 02 450 A1 (= EP 0 615 046 A2) ist ein Abstandhalterrahmen bekannt, der aus einer dreimal abgebogenen Hohlprofilleiste besteht und an der vierten Ecke noch offen ist, wobei ein Schenkel länger ist als der andere zur offenen Ecke führende Schenkel, und der über eine in den Schenkel eingeführte Sonde mit granulatförmigem Trockenmittel gefüllt wird. Die Sonde ragt mit ihrem vorderen Ende bis zur gewünschten Füllhöhe in den Schenkel. Sobald das Trockenmittel im Schenkel die Sonde erreicht, hört das Zuströmen von Trockenmittel auf. Dies erfasst ein Sensor. Der Sensor löst das Herausziehen der Sonde aus. Dabei wird über eine Leitung an die Sonde Unterdruck angelegt, damit kein Trockenmittel mehr aus der Sonde austritt.

Aus EP 0 430 924 A1 (= AT 399 587 B) ist ein Schüttstromdetektor für eine Leitung bekannt, durch die in Abstandhalterrahmen für Isolierglas einzufüllendes, granulatförmiges, hygroskopisches Material von einem Speicherbehälter einem Füllkopf zugeführt wird. Der Schüttstromdetektor weist eine an die Leitung angeschlossene Lichtquelle auf, die einen die Leitung querenden Lichtstrahl aussendet. Der Lichtquelle gegenüberliegend ist ein auf das von der Lichtquelle ausgesandte Licht ansprechender Sensor angeordnet. Der Sensor gibt bei Einwirkung des von der Lichtquelle auf ihn auftreffenden Lichtes ein Signal an eine Steuerung ab, die ihrerseits ein Signal abgibt, wenn während einer vorgewählten Zeitdauer nach dem letzten vom Sensor abgegebenen Signal kein Signal des Sensors empfangen wird.

Aus EP 3 477 037 A1 sind eine Vorrichtung und ein Verfahren zum Befüllen eines Abstandhalterrahmenschenkels oder Abstandhalterrahmens mit hygroskopischem Füllmaterial bekannt, wobei durch Bestimmen der Gewichtsabnahme eines mit Füllmaterial gefüllten Speicherbehälters eine indirekte Bestimmung der Menge des in einen Abstandhalterrahmenschenkel oder Abstandhalterrahmen eingefüllten Füllmaterials möglich sein soll.

Aus WO 2017/037288 A1 ist eine Vorrichtung zum Befüllen eines Abstandhalterrahmens mit einem Füllstoff für das Herstellen einer Isolierverglasung bekannt, wobei zumindest a) eine Füllzeit des Abstandhalterrahmens berechnet wird, b) der Abstandhalterrahmen in eine Füllvorrichtung mit Waage und Rahmenhalter eingesetzt wird, wobei der Abstandhalterrahmen in Aufhängevorrichtungen aufgehängt wird, c) der Abstandhalterrahmen während der berechneten Füllzeit befüllt wird und d) der Abstandhalterrahmen gewogen und der Füllgrad bestimmt wird. Wenn der Füllgrad > 90 % beträgt, wird das Befüllen des Abstandhalterrahmens beendet.

Aus DE 37 10 694 A1 ist ein Verfahren und eine Vorrichtung zum Füllen von geraden Hohlprofilstäben für Abstandhalterrahmen für Isolierglas mit einem körnigen Trockenmittel bekannt. Bei dem bekannten Verfahren wird eine vorab festgelegte Menge an Trockenmittel mit Hilfe von Druckluft in den Hohlprofilstab eingeleitet. Dabei wird der Hohlprofilstab an einem Ende verschlossen, um zu verhindern, dass dort Trockenmittel austreten kann. Die als Treibgas eingesetzte Druckluft soll über Löcher in dem Profilstab austreten können.

Nachteilig bei den bekannten Maßnahmen zum Bestimmen des Füllgrades von Hohlprofilleisten, insbesondere von Abstandhalterrahmen für Isolierglas, sind Wiegevorrichtungen, da durch das geringe spezifische Gewicht des üblichen Füllmaterials hochpräzise Waagen erforderlich sind.

Das Wiegen mit Hilfe von Präzisionswaagen ist wegen verschiedener Einflüsse im praktischen Betrieb, insbesondere bei Anlagen zum Herstellen von Isolierglas (Staub, Luftzug, usw.), nicht immer problemlos möglich.

Auch das Bestimmen des Füllgrades einer Hohlprofilleiste, insbesondere eines Abstandhalterrahmens für Isolierglas, mit Hilfe einer Sonde, die in die Hohlprofilleiste, beispielsweise in den Rahmenschenkel eines Abstandhalterrahmens, eingesteckt und dann wieder herausgezogen werden muss, hat sich als nachteilig herausgestellt.

Durch das Vorhandensein von Graten im Inneren von Hohlprofilleisten besteht die Gefahr, dass ein vollständiges Füllen einer Hohlprofilleiste, insbesondere eines Abstandhalterrahmens, nicht gewährleistet ist.

Der Erfindung liegt die Aufgabe zugrunde, ein Verfahren und eine Vorrichtung zum Durchführen des Verfahrens anzugeben, mit welchen das Füllen von Hohlprofilleisten, insbesondere von Hohlprofilleisten, die als Abstandhalter in Isolierglas dienen, einfach und zuverlässig möglich ist, wobei der gewünschte Füllgrad auf einfache Weise und zuverlässig erreicht werden kann.

Gelöst wird diese Aufgabe erfindungsgemäß mit einem Verfahren, das die Merkmale von Anspruch 1 aufweist.

Gelöst wird die der Erfindung zugrunde liegende Aufgabe, was die Vorrichtung betrifft, mit einer Vorrichtung, die die Merkmale des unabhängigen, auf die Vorrichtung gerichteten Anspruches 6 aufweist.

Bevorzugte und vorteilhafte Ausgestaltungen des erfindungsgemäßen Verfahrens und der erfindungsgemäßen Vorrichtung sind Gegenstand der Unteransprüche.

Bei der erfindungsgemäßen Verfahrensweise wird die Füllhöhe des Füllmaterials in dem Speicherbehälter (Speicher) vor dem Beginn des Befüllens der Hohlprofilleiste, wie eines Abstandhalterrahmens oder eines Schenkels für einen Abstandhalterrahmen, genau bestimmt. Dabei ist vorgesehen, dass auf die Oberfläche der Füllmaterialschüttung in dem Speicherbehälter über einen Kolben ein konstanter (pneumatischer) Druck aufgebracht wird. Durch diesen Druck ist gewährleistet, dass eine definierte Kontaktfläche des Füllmaterials gegeben ist, was ein genaues Erfassen der Füllhöhe im Speicherbehälter und deren Änderungen erlaubt.

Durch Entnahme von Füllmaterial aus dem Speicherbehälter wird eine Hohlprofilleiste so lange befüllt, bis sich der Kolben im Speicherbehälter nicht mehr bewegt. Die Volumenabnahme des Füllmaterials im Speicherbehälter wird durch Messen der Strecke, um die sich der Kolben bewegt hat (Wegdifferenz Δ H), bestimmt.

Das erfindungsgemäße Verfahren erlaubt es, durch Vergleichen des Sollwerts für den Füllgrad des Rahmens (dieser ergibt sich aus der Rahmengeometrie) und des Istwerts der Volumenabnahme des Füllmaterials im Speicherbehälter zu ermitteln, ob der tatsächlich gewünschte Füllgrad der Hohlprofilleiste, insbesondere des Abstandhalterrahmens, erreicht wurde.

In der Praxis kann bei dem erfindungsgemäßen Verfahren beispielsweise so vorgegangen werden, dass ein Abstandhalterrahmen unterhalb der Füllvorrichtung in einen Rahmenhalter eingesetzt und aufgehängt wird. Dann werden Löcher zum Befüllen des Rahmens gebohrt. Letztlich wird granulatförmiges Trockenmittel, das in diesem Fall das Füllmaterial ist, über die Füllvorrichtung mit dem Speicherbehälter eingefüllt.

In einer Ausführungsform der Erfindung ist eine Leitung vorgesehen, die in den Behälter mündet und die an eine Vakuumpumpe angeschlossen ist. Der Unterdruck, der durch die Pumpe erzeugt wird, unterstützt das Einfüllen von Füllmaterial in den Speicherbehälter, bzw. macht das Einfüllen erst möglich, beispielsweise, wenn der Speicherbehälter höher angeordnet ist, als ein Vorratsbehälter (Fass), aus dem Füllmaterial (wie Trockenmittel) in den Speicherbehälter eingefüllt werden soll.

Die genaue Füllhöhe des Füllmaterials in dem Speicherbehälter wird vor Beginn des Befüllens des Abstandhalterrahmens bestimmt, indem ein Kolben mit konstantem (pneumatischem) Druck auf die Oberfläche der Füllmaterialschüttung im Speicherbehälter aufgelegt wird. Wenn Füllmaterial aus dem Speicherbehälter abgelassen und eine Hohlprofilleiste oder ein Abstandhalterrahmen gefüllt wird, bewegt sich der Kolben, da er der Oberfläche von Füllmaterial im Speicherbehälter folgt. Sobald sich der Kolben nicht mehr bewegt, ist die Hohlprofilleiste oder der Abstandhalterrahmen vollständig gefüllt. Die Menge an in den Abstandhalterrahmen eingefülltem Füllmaterial wird durch Messen des Hubes des Kolbens (Wegdifferenz Δ H) ermittelt. Aus einem Vergleich zwischen Sollwert und Istwert wird ermittelt, ob der gewünschte Füllgrad der Hohlprofilleiste des Abstandhalterrahmes tatsächlich erreicht wurde, sodass eine einfache Qualitätskontrolle möglich ist.

Die dem Speicherbehälter entnommene Menge an Füllmaterial entspricht dem Produkt aus Querschnittsfläche des Speicherbehälters (= Fläche des Kolbens) und Hub (Δ H) des Kolbens.

Bei der Erfindung wird die in eine Hohlprofilleiste eingefüllte Menge an Füllmaterial volumetrisch - und nicht wie im Stand der Technik gravimetrisch - bestimmt.

Dies erlaubt es auf einfache Weise, den Füllgrad - also wie weit der Hohlraum in der Hohlprofilleiste gefüllt wird - auf den vorbestimmten (vorgegebenen) Wert einzustellen. Beispielsweise können mit der Erfindung, abgesehen von (üblichen) Füllgraden über 90 %, auch andere Füllgrade, wie 80 %, 70 % usw. erreicht werden.

Sobald der Abstandhalterrahmen bis zum gewünschten Füllgrad, insbesondere vollständig (> 90 %), gefüllt ist, wird das weitere Auslaufen von Füllmaterial aus der von der Auslassöffnung des Speicherbehälters ausgehenden Füllleitung unterbrochen. Dies erlaubt es, die als Füllöffnung dienenden Bohrlöcher im Abstandhalterrahmen problemlos zu verschließen.

Wenn die Füllleitung wenigstens bereichsweise ein elastischer Schlauch ist, kann die Füllleitung durch Anwenden von Druckluft nach Art eines Quetschventils geschlossen werden.

Alternativ kann an die Füllleitung, insbesondere im Bereich ihres an der Hohlprofilleiste angeschlossenen Endes, eine mit Unterdruck beaufschlagbare Leitung angeschlossen werden, so dass weiteres Ausströmen von Füllmaterial verhindert wird. Zusätzlich kann dem freien Ende der Füllleitung ein in eine Schließstellung verstellbarer Verschlussstopfen zugeordnet sein.

Bei einer bevorzugten Ausführungsform liegt zwischen der Außenseite des Kolbens und der Innenseite der Wand des Speicherbehälters Spiel vor, sodass durch feinen Staub die Bewegungen des Kolbens im Speicherbehälter nicht behindert/unterbunden werden.

Im Rahmen der Erfindung ist auch in Betracht gezogen, mehrere Füllvorrichtungen zu verwenden, um mehrere Abstandhalterrahmen gleichzeitig oder einen Abstandhalterrahmen über mehrere Füllöffnungen zu füllen.

Weitere Einzelheiten und Merkmale der Erfindung ergeben sich aus der nachstehenden Beschreibung bevorzugter Ausführungsbeispiele anhand der Zeichnungen. Es zeigt:
- Fig. 1: schematisch einen Speicherbehälter in Ausgangslage,
- Fig. 2: den Speicherbehälter aus Fig. 1 nach dem Füllen eines Abstandhalterrahmens,
- Fig. 3: eine Anlage zum Ausführen des erfindungsgemäßen Verfahrens und
- Fig. 4: eine weitere Anlage zum Ausführen des erfindungsgemäßen Verfahrens.

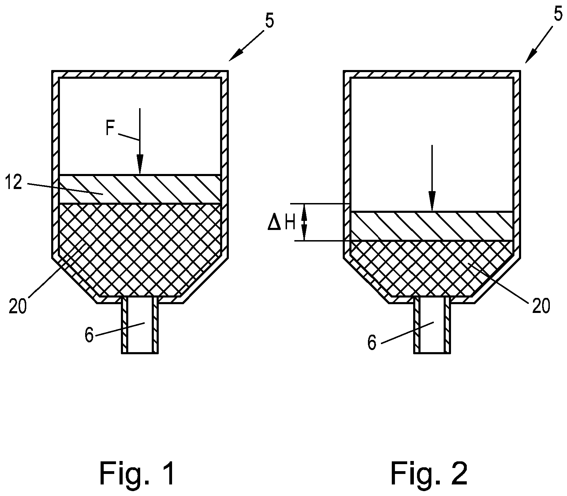

In einem in Fig. 1 und 2 schematisch gezeigten Speicherbehälter 5 ist Füllmaterial 20 (z.B. Trockenmittel in Form von Molekularsieb) bevorratet, das in einen Abstandhalterrahmen 11 für Isolierglas einzufüllen ist.

Wie in Fig. 1 gezeigt, liegt auf der Oberseite des Füllmaterials 20 ein Kolben 12 auf, der mit einer vorgegebenen Kraft F auf die Oberfläche des Füllmaterials 20 gedrückt wird.

Nach dem Füllen eines Abstandhalterrahmens 11 hat sich der Kolben 12 um die Strecke Δ H nach unten bewegt (Fig. 2). Aus der Strecke Δ H, um die sich der Kolben 12 bewegt hat, und der Fläche des Kolbens 2 kann die tatsächlich in den Abstandhalterrahmen 11 eingebrachte Menge an Füllmaterial 20 (z.B. Molekularsieb) ermittelt werden.

Hierzu kann beispielsweise vorgesehen sein, dass der Hub des Kolbens 12, also die Strecke Δ H, mit Hilfe einer Messeinrichtung erfasst wird, wie dies weiter unten beschrieben werden wird.

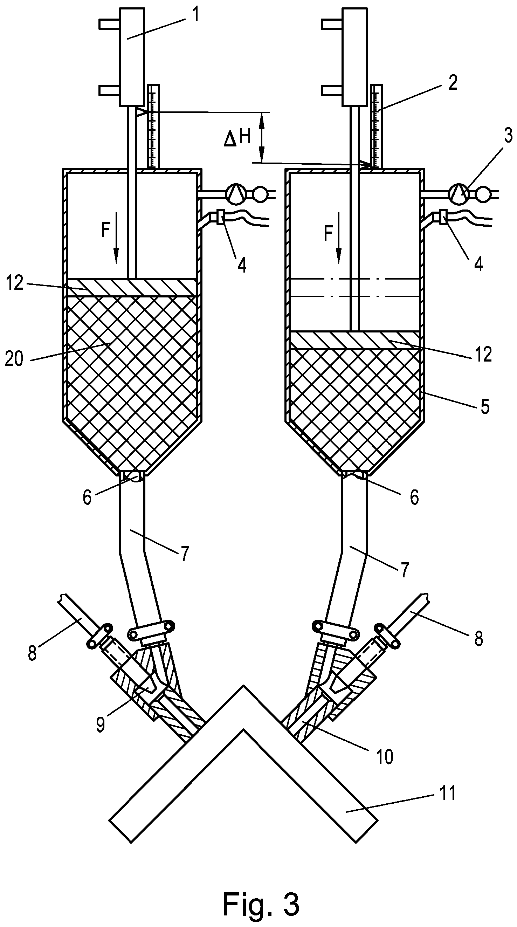

Bei der in Fig. 3 gezeigten Anlage (Vorrichtung) zum Füllen eines Abstandhalterrahmens 11 sind zwei Speicherbehälter 5 vorgesehen. In jedem der Speicherbehälter 5 ist ein Kolben 12 vorgesehen, der auf die Oberseite des Füllmaterials 20 gedrückt wird. Hierzu ist der Kolben 12 mit einer Kolbenstange eines Pneumatikzylinders 1 verbunden, sodass der Kolben 12 auf das Füllmaterial 20 in dem Speicherbehälter 5 gedrückt wird.

Um die Wegstrecke (Δ H), um die sich der Kolben 12 beim Entnehmen von Füllmaterial 20 aus den Speicherbehältern 5 bewegt, zu erfassen, ist ein Messlineal 2 vorgesehen. Anstelle eines Messlineals 2 kann eine beliebige Einrichtung vorgesehen sein, die Bewegungen des Kolbens direkt oder indirekt erfasst.

An die Speicherbehälter 5 sind Leitungen angeschlossen, die zu einer Vakuumpumpe 3 führen, sodass in den Speicherbehältern 5 Unterdruck erzeugt werden kann. Dieser Unterdruck erleichtert das Zuführen von Füllmaterial 20 (insbesondere rieselfähiges oder schüttfähiges Granulat in Form eines hygroskopischen Stoffes, wie ein Molekularsieb) über eine Leitung 4.

In den Speicherbehältern 5 ist unten eine Auslassöffnung 6 vorgesehen, an die eine Leitung 7 in Form eines Schlauches angeschlossen ist. Durch die Leitung 7 wird Füllmaterial 20 in einen Abstandhalterrahmen 11 eingebracht, indem die Leitung 7 in Füllöffnungen, die vorher in der Außenwand eines Abstandhalterrahmens 11 aus Hohlprofilleisten oder einer zu einem Rahmen gebogenen Hohlprofilleiste erzeugt wurden, eingeführt wird. Das freie Ende 10 der Leitung 7 kann mit Hilfe einer Düse 9 nach Art eines Quetschventils geschlossen werden, wenn der Düse 9 über einen Druckluftschlauch 8 Druckluft zugeführt wird. So kann die Leitung 7 verschlossen werden, wenn das Füllen eines Abstandhalterrahmens 11 beendet wurde. Das erlaubt es, den Abstandhalterrahmen 11 abzunehmen und die Öffnungen im Abstandhalterrahmen 11 durch Einbringen einer plastischen, aushärtenden Masse zu verschließen.

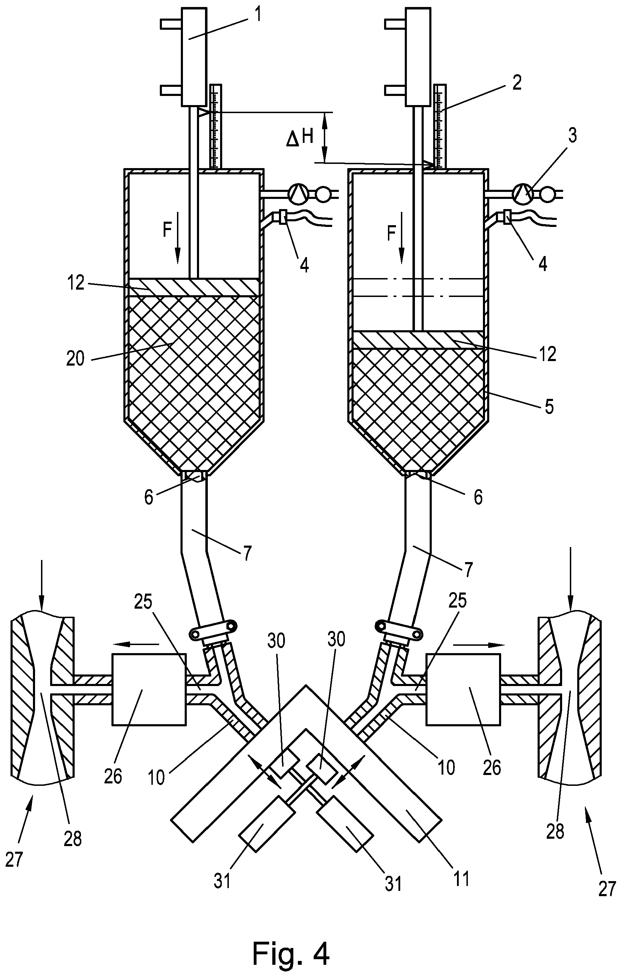

Die in Fig. 4 gezeigte Ausführungsform einer Anlage zum Ausführen des erfindungsgemäßen Verfahrens entspricht bis auf den nachstehend angeführten Unterschied der in Fig. 3 gezeigten Ausführungsform.

Von den Leitungen 7 gehen im Bereich ihrer freien Enden 10, die bei Benutzung zum Füllen von Abstandhalterrahmen 11 an diese angeschlossen sind, Unterdruckleitungen 25 aus. In den Unterdruckleitungen 25 sind Filter 26 vorgesehen. Die Unterdruckleitungen 25 sind an - in Fig. 4 nur symbolhaft dargestellten - Strahlpumpen 27 im Bereich von Engstellen 28 angeschlossen. In dem durch die Strahlpumpen 27 strömenden Medium (beispielsweise Luft) entsteht im Bereich der Engstelle 28 Unterdruck, der bewirkt, dass aus den freien Enden der Leitungen 7 kein Füllmaterial 20 (Trockenmittel) mehr austreten kann. Sobald das erreicht ist, kann der Abstandhalterrahmen 11 von der Anlage abgenommen werden. Zusätzlich wird das Austreten von Füllmaterial 20 aus den Leitungen 7 durch Verschlussstopfen 30 verhindert, wenn diese mit Hilfe ihrer Antriebe 31 in ihre Schließstellung, in der sie an den Enden 10 der Leitungen 7 anliegen, vorgeschoben worden sind.

Zusammenfassend kann ein Ausführungsbeispiel der Erfindung wie folgt beschrieben werden:
Eine Vorrichtung zum Füllen von Abstandhalterrahmen 11 aus Hohlprofilleisten besitzt einen Speicherbehälter 5 für rieselfähiges, hygroskopisches Füllmaterial 20, wie Molekularsieb. Von dem Speicherbehälter 5 geht eine Leitung 7 aus, die zu dem zu füllenden Abstandhalterrahmen 11 führt und in eine Füllöffnung in der Wand des Abstandhalterrahmens 11 mündet. Die Menge des den Abstandhalterrahmen 11 eingefüllten Füllmaterials 20 wird ermittelt, indem die Menge von aus dem Speicherbehälter 5 entnommenen Füllmaterial 20 erfasst wird. Die aus dem Speicherbehälter 5 entnommene Menge an Füllmaterial 20 wird erfasst, indem der Weg (Δ H) eines mit Druck auf dem Füllmaterial 20 im Speicherbehälter 5 aufliegenden Kolbens 12 gemessen wird. Der Füllgrad wird überprüft, indem die aus dem Speicherbehälter 5 entnommene Menge an Füllmaterial 20 mit der vorgegebenen Menge des in den Abstandhalterrahmen 11 einzufüllenden Füllmaterials 20 verglichen wird.

## Patentansprüche

1. Verfahren zum Füllen von Hohlprofilleisten, insbesondere Hohlprofilleisten in Form von Schenkeln von Abstandhalterrahmen (11) oder in Form von Abstandhalterrahmen (11), wobei aus einem Speicherbehälter (5) rieselfähiges Füllmaterial (20), insbesondere ein hygroskopisches Material, wie Molekularsieb, in die Hohlprofilleiste eingebracht wird, wobei die Menge an in die Hohlprofilleiste eingebrachtem Füllmaterial (20) erfasst wird, indem die aus dem Speicherbehälter (5) entnommene Menge an Füllmaterial (20) erfasst wird, **dadurch gekennzeichnet, dass** die Änderung des Pegels an Füllmaterial (20) im Speicherbehälter (5) erfasst wird, dass auf die Oberseite des im Speicherbehälter (5) enthaltenen Füllmaterials (20) Druck mit Hilfe eines im Speicherbehälter (5) verschiebbaren Kolbens (12) ausgeübt wird und dass das Absinken des Pegels an Füllmaterial (20) im Speicherbehälter (5) durch Erfassen des Weges des Kolbens (12) im Speicherbehälter (5) ermittelt wird.

2. Verfahren nach Anspruch 1, **dadurch gekennzeichnet, dass** der Kolben (12) pneumatisch belastet wird.

3. Verfahren nach Anspruch 1 oder 2, **dadurch gekennzeichnet, dass** der Füllgrad der Hohlprofilleiste überprüft wird, indem ein errechneter Sollwert für den Füllgrad der Hohlprofilleiste mit der Menge an aus dem Speicherbehälter (5) entnommenem Füllmaterial (20) als Istwert verglichen wird.

4. Verfahren nach einem der Ansprüche 1 bis 3, **dadurch gekennzeichnet, dass** in dem Speicherbehälter (5) Unterdruck erzeugt wird, um Füllmaterial (20) in den Speicherbehälter (5) zu saugen.

5. Verfahren nach einem der Ansprüche 1 bis 4, **dadurch gekennzeichnet, dass** das Austreten von Füllmaterial (20) aus der Auslassöffnung nach dem Beenden des Füllvorganges durch Verschließen der Leitungen (7) nach Art eines Quetschventiles verhindert wird.

6. Vorrichtung zum Ausführen des Verfahrens nach einem der Ansprüche 1 bis 5, **gekennzeichnet durch** einen Speicherbehälter (5) für Füllmaterial (20), durch einen im Speicherbehälter (5) verschiebbar aufgenommenen Kolben (12), durch eine Einrichtung (1) zum Belasten des Kolbens (12) mit vorgegebenem Druck, durch eine Leitung (7), die den Speicherbehälter (5) mit der zu füllenden Hohlprofilleiste verbindet, und durch eine Einrichtung (2) zum Erfassen des Wegstrecke, die der Kolben (12) im Speicherbehälter (5) beim Entnehmen von Füllmaterial (20) zurücklegt.

7. Vorrichtung nach Anspruch 6, **dadurch gekennzeichnet, dass** an den Speicherbehälter (5) eine mit Unterdruck beaufschlagbare Leitung (4) zum Erzeugen von Unterdruck in dem Speicherbehälter (5) angeschlossen ist.

8. Vorrichtung nach Anspruch 6 oder 7, **dadurch gekennzeichnet, dass** an die Auslassöffnung (6) des Speicherbehälters (5) eine Leitung (7) angeschlossen ist und dass der Leitung (7) ein Absperrorgan zugeordnet ist.

9. Vorrichtung nach einem der Ansprüche 6 bis 8, **dadurch gekennzeichnet, dass** zwischen dem Kolben (12) und der Innenseite der Wand des Speicherbehälters (5) Spiel vorliegt.

10. Vorrichtung nach einem der Ansprüche 6 bis 9, **dadurch gekennzeichnet, dass** der Kolben (12) stillsteht, wenn in die Hohlprofilleiste die Istmenge an Füllmaterial (20) eingefüllt wurde.

11. Vorrichtung nach einem der Ansprüche 6 bis 10, **dadurch gekennzeichnet, dass** die Einrichtung zum Erfassen der Wegstrecke (Δ H), um die sich der Kolben (12) im Speicherbehälter (5) bewegt, ein Messlineal (2) ist.

12. Vorrichtung nach einem der Ansprüche 6 bis 11, **dadurch gekennzeichnet, dass** die Leitung (7), die vom Speicherbehälter (5) zu der zu füllenden Hohlprofilleiste führt, ein flexibler Schlauch ist und dass das freie Ende (10) der Füllleitung (7) nach Art eines Quetschventils verschließbar ist.

13. Vorrichtung nach Anspruch 12, **dadurch gekennzeichnet, dass** eine mit Druckluft beaufschlagbare Düse (9) vorgesehen ist, um die Leitung (7) nach Art eines Quetschventils zu schließen.

14. Vorrichtung nach einem der Ansprüche 6 bis 11, **dadurch gekennzeichnet, dass** an die Leitung (7) eine Unterdruckleitung (25) angeschlossen ist, die zu einer Quelle für Unterdruck, insbesondere eine Strahlpumpe (28), führt.

15. Vorrichtung nach Anspruch 14, **dadurch gekennzeichnet, dass** in der Unterdruckleitung (25) ein Filter (26) vorgesehen ist.

16. Vorrichtung nach einem der Ansprüche 6 bis 15, **dadurch gekennzeichnet, dass** zwei parallel geschaltete Speicherbehälter (5) vorgesehen sind und dass von jedem Speicherbehälter (5) eine Leitung (7) zum Füllen eines Abstandhalterrahmens (11) ausgeht.

## Claims

1. Method for filling hollow-section strips, in particular hollow-section strips in the form of legs of spacer frames (11) or in the form of spacer frames (11), wherein free-flowing fill material (20), in particular a hygroscopic material, such as a molecular sieve, is introduced from a storage tank (5) into the hollow-section strip, wherein the quantity of fill material (20) introduced into the hollow-section strip is detected by detecting the quantity of fill material (20) removed from the storage tank (5), **characterized in that** the change in the level of fill material (20) in the storage container (5) is detected, **in that** pressure is exerted on the upper side of the fill material (20) contained in the storage tank (5) by means of a piston (12) that can be displaced in the storage tank (5), and **in that** the drop in the level of the fill material (20) in the storage tank (5) is determined by detecting the travel of the piston (12) in the storage tank (5).

2. Method according to claim 1, **characterized in that** the piston (12) is loaded pneumatically.

3. Method according to claim 1 or 2, **characterized in that** the degree of filling of the hollow-section strip is verified by a calculated threshold value for the degree of filling of the hollow-section strip being compared to the amount of the fill material (20) removed from the storage tank (5) as an actual value.

4. Method according to one of claims 1 to 3, **characterized in that** underpressure is generated in the storage tank (5) in order to suction off fill material (20) in the storage tank (5).

5. Method according to one of claims 1 to 4, **characterized in that** fill material (20) is prevented from exiting from the outlet opening after the filling process is completed by closing the lines (7) in the manner of a pinch valve.

6. Device for carrying out the method according to one of claims 1 to 5, **characterized by** a storage tank (5) for fill material (20), by a piston (12) displaceably accommodated in the storage tank (5), by a system (1) for loading the piston (12) with a preset pressure, by a line (7) connecting the storage tank (5) to the hollow-section strip to be filled, and by a system (2) for detecting the travel distance traveled by the piston (12) in the storage tank (5) when fill material (20) is removed.

7. Device according to claim 6, **characterized in that** a line (4) to which underpressure can be applied is connected to the storage tank (5) for generating underpressure in the storage tank (5).

8. Device according to claim 6 or 7, **characterized in that** a line (7) is connected to the outlet opening (6) of the storage tank (5) and **in that** the line (7) is assigned to a shut-off valve.

9. Device according to one of claims 6 to 8, **characterized in that** there is play between the piston (12) and the inside of the wall of the storage tank (5).

10. Device according to one of claims 6 to 9, **characterized in that** the piston (12) stands still when the actual amount of the fill material (20) has been poured into the hollow-section strip.

11. Device according to one of claims 6 to 10, **characterized in that** the system for detecting the travel distance (ΔH), by which the piston (12) is moved in the storage tank (5), is a measuring guide (2).

12. Device according to one of claims 6 to 11, **characterized in that** the line (7), which runs from the storage tank (5) to the hollow-section strip that is to be filled, is a flexible hose, and **in that** the free end (10) of the fill line (7) can be closed in the manner of a pinch valve.

13. Device according to claim 12, **characterized in that** a nozzle (9) to which compressed air can be applied is provided in order to close the line (7) in the manner of a pinch valve.

14. Device according to one of claims 6 to 11, **characterized in that** an underpressure line (25) is connected to the line (7), which underpressure line runs to a source for underpressure, in particular a jet pump.

15. Device according to claim 14, **characterized in that** a filter (26) is provided in the underpressure line (25).

16. Device according to one of claims 6 to 15, **characterized in that** two storage tanks (5) are provided that are connected in parallel and **in that** a line (7) for filling a spacer frame (11) extends from each storage tank (5).

## Revendications

1. Procédé pour remplir des barres profilées creuses, en particulier des barres profilées creuses formant des bras de cadres intercalaires (11) ou formant des cadres intercalaires (11), dans lequel un matériau de remplissage fluide (20), en particulier un matériau hygroscopique tel qu'un tamis moléculaire, est introduit à partir d'un réservoir (5) dans une barre profilée creuse, la quantité de matériau de remplissage (20) introduite dans la barre profilée creuse étant déterminée en déterminant la quantité de matériau de remplissage (20) prélevée dans le réservoir (5), **caractérisé en ce que** le changement du niveau de matériau de remplissage (20) dans le réservoir (5) est déterminé, **en ce qu'**une pression est exercée sur la face supérieure du matériau de remplissage (20) contenu dans le réservoir (5) à l'aide d'un piston (12) capable de coulisser dans le réservoir (5) et **en ce que** la baisse du niveau de matériau de remplissage (20) dans le réservoir (5) est déterminée par la détermination de la course du piston (12) dans le réservoir (5).

2. Procédé selon la revendication 1, **caractérisé en ce que** le piston (12) est chargé pneumatiquement.

3. Procédé selon la revendication 1 ou 2, **caractérisé en ce que** le niveau de remplissage de la barre profilée creuse est vérifié en comparant une valeur de consigne calculée pour le niveau de remplissage de la barre profilée creuse au matériau de remplissage (20) prélevé dans le réservoir (5) constituant une quantité réelle.

4. Procédé selon l'une des revendications 1 à 3, **caractérisé en ce qu'**un vide est créé dans le réservoir (5) pour aspirer du matériau de remplissage (20) dans le réservoir (5).

5. Procédé selon l'une des revendications 1 à 4, **caractérisé en ce que** le matériau de remplissage (20) est empêché de s'échapper par l'ouverture de sortie après la fin de l'opération de remplissage par la fermeture des conduites (7) à la manière d'une vanne à manchon.

6. Dispositif pour la mise en œuvre du procédé selon l'une des revendications 1 à 5, **caractérisé en ce qu'**il comporte un réservoir (5) pour du matériau de remplissage (20), un piston (12) logé avec possibilité de translation dans le réservoir (5), une installation (1) pour exercer une pression prédéterminée sur le piston (12), une conduite (7) qui relie le réservoir (5) à la barre profilée creuse à remplir et une installation (2) pour déterminer la course parcourue par le piston (12) dans le réservoir (5) lors du prélèvement de matériau de remplissage (20).

7. Dispositif selon la revendication 6, **caractérisé en ce qu'**une conduite (4) pouvant recevoir un vide est raccordée au réservoir (5) pour créer un vide dans le réservoir (5).

8. Dispositif selon la revendication 6 ou 7, **caractérisé en ce qu'**une conduite (7) est raccordée à l'ouverture de sortie (6) du réservoir (5) et **en ce que** la conduite (7) est associée à un organe d'obturation.

9. Dispositif selon l'une des revendications 6 à 8, **caractérisé en ce qu'**il existe un jeu entre le piston (12) et la face intérieure de la paroi du réservoir (5).

10. Dispositif selon l'une des revendications 6 à 9, **caractérisé en ce que** le piston (12) est immobile quand la barre profilée creuse a été remplie avec la quantité réelle de matériau de remplissage (20).

11. Dispositif selon l'une des revendications 6 à 10, **caractérisé en ce que** l'installation pour déterminer la course (ΔH) de laquelle le piston (12) se déplace dans le réservoir (5) est une règle de mesure (2).

12. Dispositif selon l'une des revendications 6 à 11, **caractérisé en ce que** la conduite (7) menant du réservoir (5) à la barre profilée creuse à remplir est un tuyau flexible et **en ce que** l'extrémité libre (10) de la conduite de remplissage (7) peut être obturée à la manière d'une vanne à manchon.

13. Dispositif selon la revendication 12, **caractérisé en ce qu'**une buse (9) pouvant recevoir de l'air comprimé est prévue pour obturer la conduite (7) à la manière d'une vanne à manchon.

14. Dispositif selon l'une des revendications 6 à 11, **caractérisé en ce qu'**est raccordée à la conduite (7) une conduite de vide (25) venant d'une source de vide, en particulier d'une pompe à éjecteur (28).

15. Dispositif selon la revendication 14, **caractérisé en ce qu'**un filtre (26) est prévu dans la conduite de vide (25).

16. Dispositif selon l'une des revendications 6 à 15, **caractérisé en ce que** deux réservoirs (5) montés en parallèle sont prévus et **en ce qu'**une conduite (7) part de chaque réservoir (5) pour remplir un cadre intercalaire (11).
